# EUROPÄISCHE PATENTSCHRIFT

(11) **EP 1 773 625 B1**
(45) Veröffentlichungstag und Bekanntmachung des Hinweises auf die Patenterteilung: **30.09.2009**
(21) Anmeldenummer: 05761223.6
(22) Anmeldetag: 15.07.2005
(51) Int. Cl.: B60R 11/00, B60N 3/10, H01R 13/71, H01R 13/639

(54) **MULTIFUNKTIONALES STECKSYSTEM**
MULTIFUNCTIONAL PLUG-IN SYSTEM
SYSTEME D'ENFICHAGE MULTIFONCTIONNEL

(30) Priorität: 23.07.2004 DE 102004035871
(43) Veröffentlichungstag der Anmeldung: 18.04.2007
(73) Patentinhaber: Volkswagen Aktiengesellschaft, 38436 Wolfsburg (DE)
(72) Erfinder: MÜNDEMANN, Sven-Oliver, 38350 Helmstedt (DE); WALENKAMP, Gijs, 38108 Braunschweig (DE); SCHMIDT, Andre, 38524 Sassenburg (DE); STEHLIN, Marc, 38442 Wolfsburg (DE); GAUDING, Jens, 37688 Beverungen (DE)
(86) Internationale Anmeldenummer: PCT/EP2005/007727
(87) Internationale Veröffentlichungsnummer: WO 2006/010500

(56) Entgegenhaltungen:
- EP-A- 1 334 877
- EP-A2- 0 360 032
- DE-A1- 10 206 349
- DE-A1- 19 527 778
- DE-U1- 29 805 453
- FR-A- 2 088 586
- US-A- 4 109 988
- US-A- 6 062 518
- US-A1- 2003 127 878
- US-B1- 6 450 828

## Beschreibung

Die vorliegende Erfindung betrifft ein Stecksystem zur Halterung von Einbaukomponenten in einem Fahrzeug. Darüber hinaus betrifft die vorliegende Erfindung ein entsprechendes Verfahren zur Halterung derartiger Einbaukomponenten.

Die Ausstattung von Kraftfahrzeugen wird immer vielfältiger. Insbesondere besteht der Bedarf, im Fahrgastraum zahlreiche Einbaukomponenten anzuordnen. Beispiele hierfür sind Tische, Aschenbecher, Getränkehalter, elektronische Geräte und Halter für elektronische Geräte. Diese Komponenten sind im Fahrgastraum an einer gewünschten Stelle zu fixieren, damit die vorgeschriebene Sicherheit gewährleistet ist.

In der Regel erfolgt die Fixierung, indem die jeweiligen Einbaukomponenten an eine entsprechende Fahrzeugkomponente, z. B. Sitz, Mittelkonsole und dergleichen, angeschraubt, angenietet oder einteilig damit verbunden werden. Daher ist es notwendig, den Fahrgastraum nach den durchschnittlichen Bedürfnissen der Benutzer auszugestalten. Es besteht aber immer mehr die Forderung nach einer Individualisierung eines Kraftfahrzeugs. In diesem Zusammenhang sind auch die Einbaukomponenten individuell auszuwählen und anzuordnen. Dies ist jedoch nur sehr eingeschränkt möglich, indem beispielsweise Sonderausstattungen bereits bei der Bestellung eines PKWs individuell ausgesucht werden. Ein Stecksystem mit den Merkmalen des Oberbegriffs des Anspruchs 1 zeigt die US 6 450 828 B1, welche auch die Merkmale des Oberbegriffs des Verfahrens anspruchs 9 zeigt.

Eine Aufgabe der vorliegenden Erfindung besteht somit darin, die Möglichkeiten einer Individualisierung des Fahrgastraums zu verbessern.

Erfindungsgemäß wird diese Aufgabe wird gelöst durch ein Stecksystem nach Anspruch 1, bzw. durch das Verfahren nach Anspruch 9.

Erfindungsgemäss weist eine der Steckeinrichtungen eine starre Halteklammer auf, die zur Erzielung einer Steckverbindung in die passende andere Steckeinrichtung in einer ersten Richtung einführbar und im eingeführten Zustand in einer zur ersten senkrechten zweiten Richtung verschiebbar ist, so dass die Halteklammer ein Haltestück der anderen Steckeinrichtung hintergreift. Ein konkrete Realisierung besteht darin, dass ein Stecker in eine Buchse eingesteckt und nach unten gedrückt wird. Eine derartige Verbindung erweist sich als mechanisch sehr stabil.

Die vorliegende Erfindung wird nun anhand der beigefügten Zeichnungen näher erläutert, in denen zeigen:
- Figur 1: eine Ausführungsform eines erfindungsgemäßen Stecksystems für einen Handyhalter;
- Figur 2: den Gegenstand von Figur 1 von einer rückwärtigen Ansicht;
- Figur 3: den Stecker und die Buchse von Figur 1;
- Figur 4: den Stecker von Figur 3 in vergrößerter Darstellung;
- Figur 5: einen Querschnitt durch Stecker und Buchse von Figur 3 mit geöffneten Kontakten;
- Figur 6: den Stecker und die Buchse mit geschlossenen Kontakten;
- Figur 7: das Cockpit eines Kraftfahrzeugs mit verschiedenen Anbauteilen;
- Figur 8: das Cockpit mit einer offenen und einer verschlossenen Buchse;
- Figur 9: ein zweites nicht-erfindungsgemäßes Stecksystem;
- Figur 10: einen Schnitt durch das Verriegelungssystem von Figur 9 im verriegelten Zustand;
- Figur 11: einen Schnitt durch das Stecksystem von Figur 9 im geöffneten Zustand;
- Figur 12: einen Aschenbecher für das zweite nicht erfinderische Stecksystem;
- Figur 13: eine USB-Schnittstelle;
- Figur 14: einen Gestränkehalter;
- Figur 15: ein drittes nicht-erfindungsgemäßes Stecksystem;
- Figur 16: ein viertes nicht-erfindungsgemäßes Stecksystem;
- Figur 17: eine Detailansicht des Steckers von Figur 16;
- Figur 18: ein fünftes, nicht-erfindungsgemäßes Stecksystem
- Figur 19: eine perspektivische Darstellung des Stecksystems von Figur 18 aus einem anderen Sichtwinkel;
- Figur 20: das Stecksystem von Figur 18 im verriegelten Zustand;

- Figur 21: ein sechstes nicht-erfindungsgemäßes Stecksystem mit mehreren ansteckbaren Komponenten;
- Figur 22: das Innere eines Kraftfahrzeugs mit einer Vielzahl von multifunktionalen Steckverbindern;
- Figur 23: ein siebtes nicht-erfindungsgemäßen Stecksystem; und
- Figur 24: das Innere eines Kraftfahrzeugs mit einer Vielzahl von multifunktionalen zweiten Steckeinrichtungen.

Die nachfolgend näher geschilderten Ausführungsformen stellen bevorzugte Ausführungsbeispiele der vorliegenden Erfindung dar.

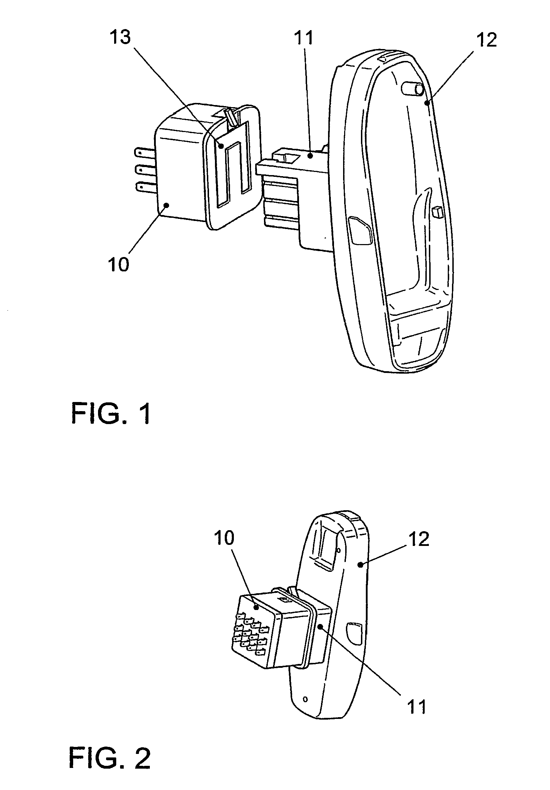

Figur 1 zeigt eine perspektivische Ansicht des erfindungsgemäßen Stecksystems. In eine Buchse 10 ist ein Stecker 11, an den ein Halter 12 für ein Mobilfunktelefon montiert ist, einsteckbar. Die Buchse 10 ist beispielsweise in eine Konsole eines Kraftfahrzeugs montierbar.

Der Stecker 11 lässt sich in die U-förmige Aufnahme 13 der Buchse 10 einführen. Bei kompletter Steckung ergibt sich somit das in Figur 2 wiedergegebene Bild von der Rückseite des Halters 12.

Die Steckverbindung dient jedoch nicht nur zur mechanischen Halterung eines Anbauteils im Fahrzeug. Vielmehr soll durch die Steckverbindung für bestimmte Anbaukomponenten, wie beispielsweise dem Mobilfunktelefonhalter 12 von Figur 1, auch eine elektrische Kontaktierung gewährleistet werden. Hierzu besitzen die Buchse 10 und der Stecker 11 entsprechend anderen elektrischen Steckverbindungen Metallkontakte. Entsprechend dem vorliegenden Beispiel sind dies im Falle des Steckers 11 Rundkontakte 14 auf der der Buchse 10 zugewandten Seite. An der Rückseite der Buchse 10 sind entsprechend dem vorliegenden Beispiel Flachkontakte angeordnet. Die Aussparung 13 kann aus optischen oder Sicherheitsgründen mit einer Blende 15 verschlossen sein, solange der Stecker 11 nicht eingesteckt ist.

Ferner kann mit einem Verriegelungshebel 16 verhindert werden, dass der Stecker 11 ungewollt aus der Verbindung gelöst wird.

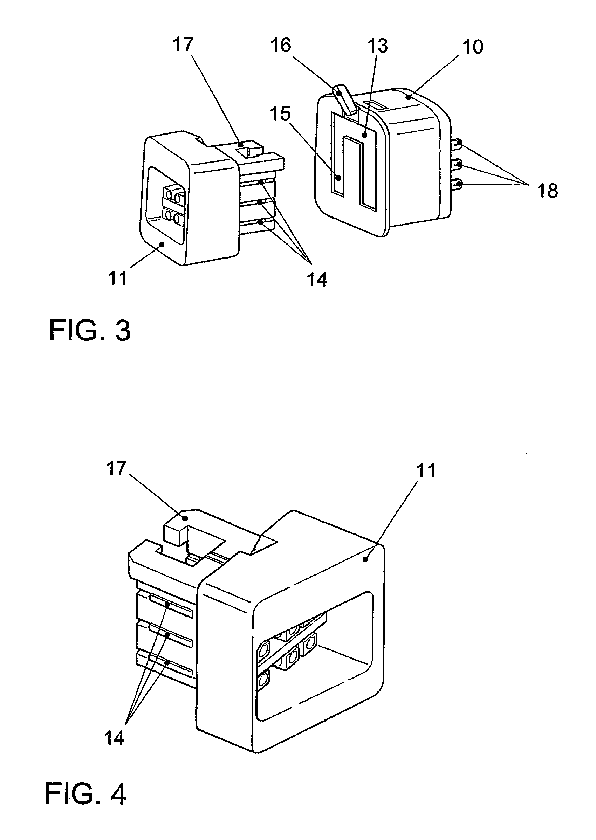

Zur axialen Fixierung des Steckers 11 in der Buchse 10 wird der Stecker 11 nach dem axialen Einstecken vertikal nach unten gedrückt. In diesem Endzustand greifen Halteklammern 17, die in der vergrößerten Darstellung von Figur 4 besser zu erkennen sind, hinter entsprechende Haltenasen in der Buchse 10.

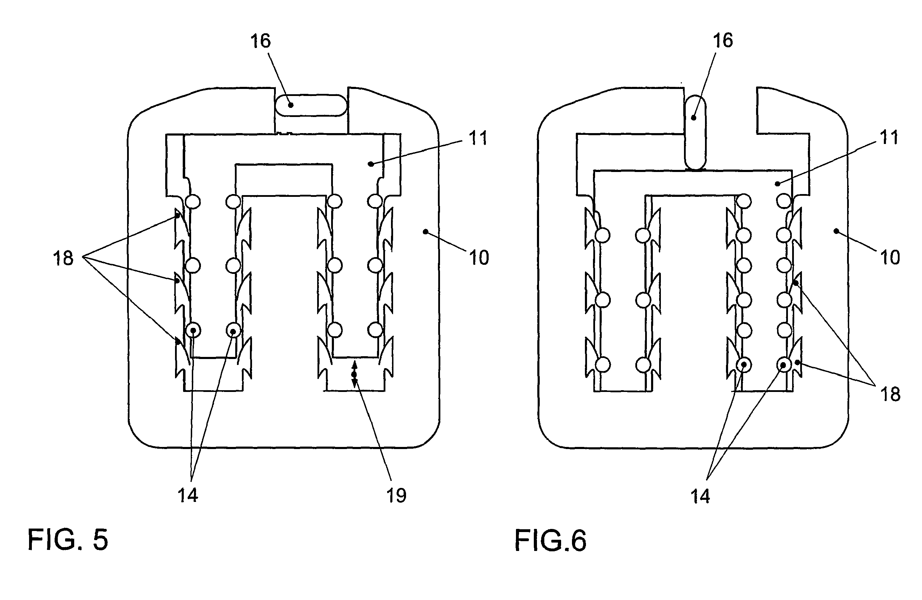

In den Figuren 5 und 6 ist diese vertikale Bewegung speziell hinsichtlich der elektrischen Kontakte im Schnitt durch die Buchse 10 bzw. den Stecker 11 dargestellt. Dabei zeigt Figur 5 den Zustand nach dem axialen Einführen des Steckers 11 in die Buchse 10. In diesem Zustand liegen die buchsenseitigen Kontakte 18 nicht an den steckerseitigen Rundkontakten 14 an, weshalb die Kontakte als geöffnet bezeichnet werden können. Der Verriegelungshebel 16 befindet sich ebenfalls in seinem geöffneten Zustand. Zur Herstellung der endgültigen mechanischen und elektrischen Verbindung wird der Stecker 11 um einen Arretierungsweg 19, der beispielsweise 4 bis 5 mm beträgt, vertikal nach unter verschoben, wobei auch die Halteklammern 17 gemäß Figur 4 für die mechanische Verbindung zum Einsatz kommen.

Bei diesem Arretierungsvorgang schieben sich die Rundkontakte 14 des Steckers 11 über die Flachkontakte 18 der Buchse 10, so dass elektrischer Kontakt hergestellt wird. Gleichsam wird im oberen Bereich der Buchse 10 genügend Raum frei, so dass das Verriegelungselement 16 nach unten schwenken kann. Ein Lösen des Steckers 11 vertikal nach oben ist damit nicht mehr möglich. Für die axiale Fixierung in diesem Zustand sorgen die Halteklammern 17 (vgl. Figur 4).

Die formschlüssige mechanische Verbindung zwischen Stecker 11 und Buchse 10 stellt eine robuste, belastbare Einheit dar. Die Bautiefe der Buchse kann dabei kleiner als 25 mm gewählt werden. Die formschlüssige Verbindung zwischen Stecker und Buchse ermöglicht auch den Einsatz von nicht-federnden Schleifkontakten, so dass der Verschleiß der Kontakte reduziert ist und ohne weiteres 5000 Steckungen gewährleistet werden können. Grundsätzlich kann eine beliebige Anzahl an elektrischen Kontakten in dem Stecksystem realisiert werden, auch wenn in Figur 5 und 6 jeweils zwölf Kontakte wiedergegeben sind. Somit lassen sich auch beispielsweise Multimediageräte mit HF-Anschluss, Stromversorgung und üblichen Datenleitungen anschließen.

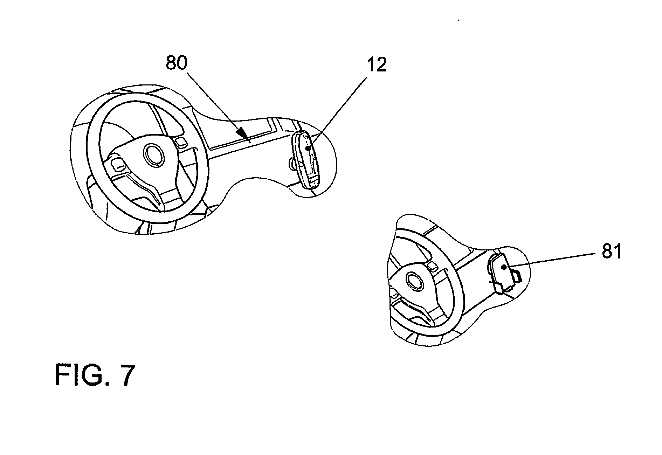

In Figur 7 ist das Cockpit eines Fahrzeugs dargestellt, wobei das erfindungsgemäße Stecksystem an der Mittelkonsole eingesetzt ist. In dem Bild links oben in Figur 7 ist der Halter 12 für ein Mobilfunktelefon entsprechend Figur 1 dargestellt, wie er an einer Mittelkonsole 80 in dem Cockpit befestigt werden kann. In der Zeichnung rechts unten ist angedeutet, wie in die gleiche Buchse anstelle des Halters 12 ein PDA-Halter 81 für einen Minicomputer eingesteckt ist.

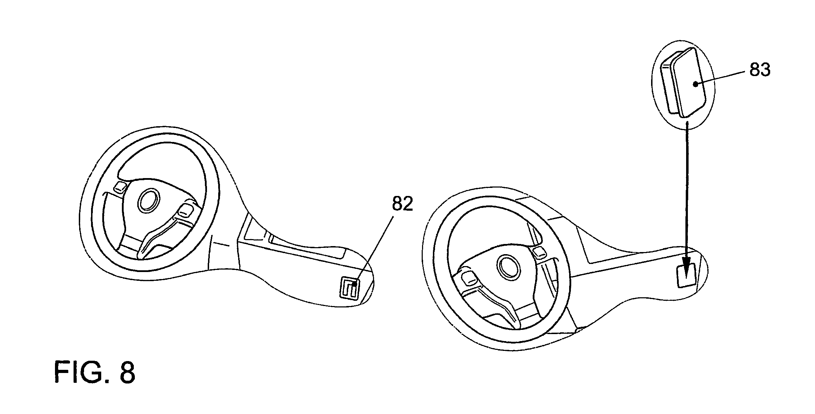

Die erfindungsgemäßen Stecksysteme können an vorgegebenen Orten im Fahrzeug angebracht werden. An diesen Orten sind Öffnungen vorzusehen, in die Buchsen des Stecksystems eingesetzt werden können. Grundsätzlich muss jedoch nicht bei jeden Fahrzeug jeder mögliche Ort mit einer Buchse versehen sein. Wird das Stecksystem an einem bestimmten Ort nicht benutzt, so bleibt eine vorgefertigte Einbauöffnung 82, wie sie links oben in Figur 8 angedeutet ist, leer. Aus optischen und Sicherheitsgründen kann auf diese unbenutzte Einbauöffnung 82 eine Abdeckkappe 83 aufgesteckt werden. Dies ist im rechten Teil von Figur 8 bildlich wiedergegeben.

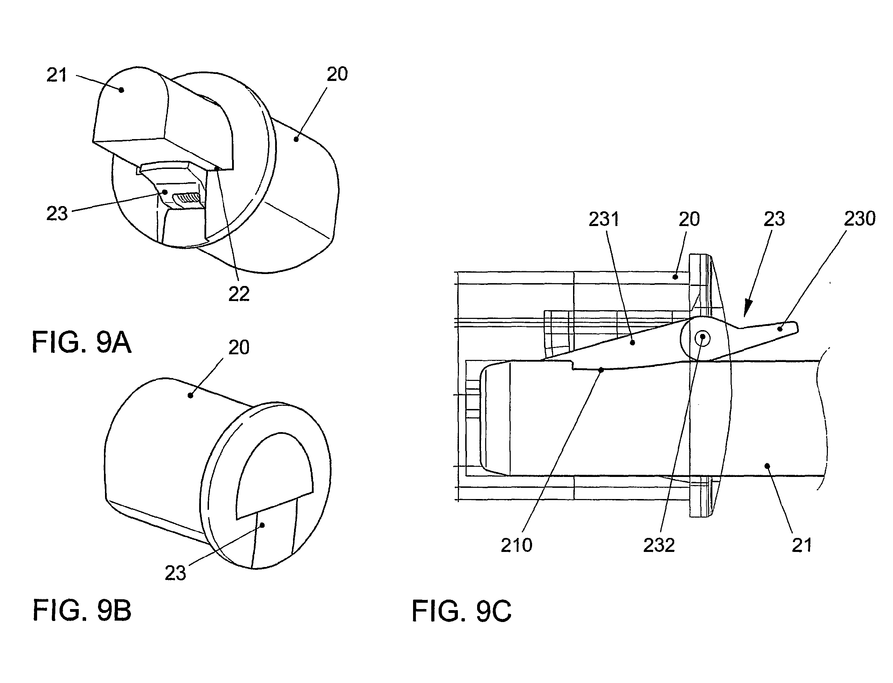

Eine zweites nicht-erfindungsgemässes Stecksystem ist in den Figuren 9 bis 14 im Detail dargestellt. Die Figuren 9A, 9B und 9C zeigen den prinzipiellen Aufbau dieses Stecksystems. Figur 9A zeigt die rundlich ausgeformte Buchse 20, in die ein Stecker bzw. Steckerteil 21 eingesteckt ist. Die Buchse 20 besitzt wiederum eine Bautiefe von etwa 30 mm.

Die Form des Steckers 21 sowie die entsprechende Öffnung in der Buchse 20 ist halbkreisförmig ausgebildet, so dass Verdrehsicherheit gewährleistet ist. Darüber hinaus sorgen Schultern 22 an der Buchse 20 für eine formschlüssige Auflage des Steckers 21 und gewährleisten eine hohe vertikale Belastbarkeit. An der Flachseite (hier Unterseite) des Steckers 21 ist in Figur 9A ein Teil einer schwenkbaren Verriegelungsklappe 23 sichtbar. Diese Verriegelungsklappe 23 dient zum einen zum Verschließen der Buchse 20, wenn kein Stecker 21 eingesteckt ist. In Figur 9B ist die Buchse 20 in ihrem verschlossenen Zustand dargestellt. Die Verriegelungsklappe 23 dient aber auch dazu, den Stecker 21 in seinem eingesteckten Zustand in der Buchse 20 zu verriegeln. Der verriegelte Zustand ist in der Schnittzeichnung von Figur 9C wiedergegeben. Die Verriegelungsklappe 23 ist in die Buchse 20 geschwenkt, so dass nur noch ein Bestätigungsabschnitt 230 aus der Buchse 20 ragt. Der eingeschwenkte Teil 231 der Verriegelungsklappe 23 ragt in eine Ausnehmung 210 des Steckers 21. Dadurch wird das Herausziehen des Steckers 21 aus der Buchse 20 in axialer Richtung unterbunden. Damit sich die Verriegelung nicht löst, ist die Verriegelungsklappe 23 an ihrer Achse 232 federnd gelagert und drückt in die Ausnehmung 210.

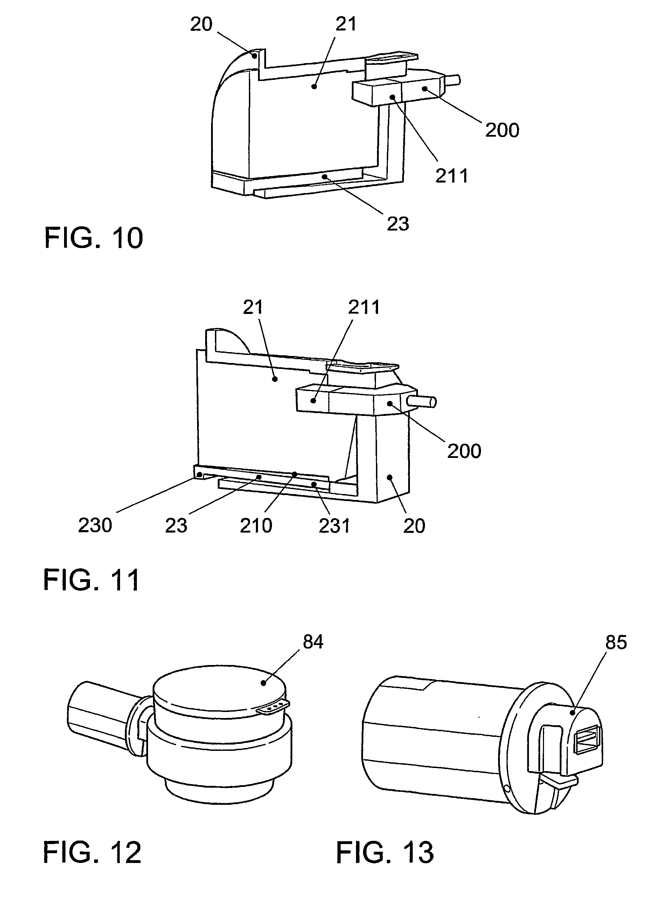

Die Schnittzeichnung von Figur 10 zeigt das Stecksystem in einer etwas abgewandelten Form. Der Stecker 21 ist hier mit einem USB-Stecker 211 versehen. Die entsprechende USB-Buchse 200 ist in die Buchse 20 integriert. Im eingesteckten und mit Hilfe der Verriegelungsklappe 23 verriegelten Zustand ist damit auch die USB-Steckverbindung hergestellt.

Zum Lösen der Steckverbindung wird die Verriegelungsklappe 23 an ihrem Betätigungsabschnitt 230 nach oben gedrückt, so dass der Verriegelungsabschnitt 231 aus der Aussparung 210 des Steckers 21 austritt. Damit ist nun eine axiale Bewegung des Steckers 21 aus der Buchse 20 möglich, wodurch auch die USB-Steckverbindung gelöst werden kann.

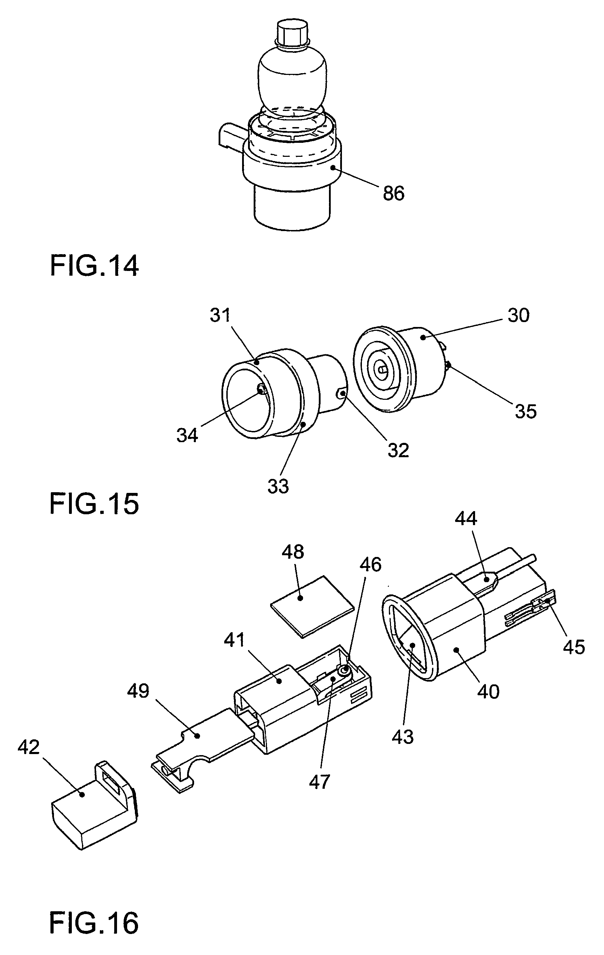

Anbauteile, die mit Hilfe des Steckers 21 in die Buchse 20 einsteckbar sind, sind in den Figuren 12 bis 14 beispielhaft dargestellt. Figur 12 zeigt einen Aschenbecher 84, der durch das Stecksystem im Fahrzeug befestigt werden kann. Darüber hinaus zeigt Figur 13 einen USB-Adapter 85 und Figur 14 einen Getränkehalter 86 zur Befestigung in einem Fahrzeug. In ähnlicher Weise sind Halter für Vasen, Mülleimer und dergleichen denkbar.

Ein drittes nicht-erfindungsgemässes Stecksystem wird nun anhand von Figur 15 näher erläutert. Bei dieser Ausführungsform handelt es sich um ein Stecksystem nach dem Bajonett-Prinzip. Auch hier wird in eine Buchse 30 ein Stecker 31 eingeführt. Durch eine Drehung um ca. 20° verrasten zwei am Stecker 31 befindliche Positioniernasen 32 in der Buchse 30. Eine hier am Stecker 31 vorgesehene Feststellschraube 33 wird solange gedreht, bis sie mit ihrer planaren Fläche an einer planaren Fläche der Buchse 30 anliegt, so dass eine kraftschlüssige Verbindung entsteht. Damit ist es nicht mehr möglich, dass die Bajonettverbindung gelöst wird.

Wie die vorhergehenden Ausführungsformen ist auch dieses Stecksystem durch eine formschlüssige und damit belastbare Verbindung gekennzeichnet. Die Bautiefe der Buchse beträgt beispielsweise etwa 25 mm. Ist ein HF/Coax-Kontakt an der Rückseite der Buchse 30 vorgesehen, so ist etwa mit einer Bautiefe von 35 mm zu rechnen. Durch die formschlüssige Verbindung kann auch hier auf federnde Kontakte am Stecker 31 bzw. der Buchse 30 verzichtet werden, so dass ein Verschleiß an den Kontakten grundsätzlich verringert ist.

In dem in Figur 15 gewählten Beispiel befinden sich in dem Stecker 31 Rundkontakte 34, die sich ähnlich dem in den Figuren 5 und 6 dargestellten Prinzip bei der gegenseitigen Verdrehung von Buchse und Stecker mit den in der Buchse 30 befindlichen Flachkontakten 35 verbinden. Die Anzahl der Kontakte kann auch hier beliebig gewählt werden.

Ein viertes nicht-erfindungsgemässes Stecksystem basierend auf dem Kugelschreiberprinzip ist in Figur 16 dargestellt. Die Zeichnung stellt eine Explosionsansicht der wichtigsten Komponenten einschließlich Buchse 40, Stecker 41 und Anbauteil 42 dar. Die Buchse 40 besitzt einen nach innen schwenkbaren Deckel 43. Darüber hinaus sind in dem Beispiel von Figur 16 in die Buchse 40 ein USB-Stecker 44 und Schleifkontakte 45 für die Stromversorgung integriert. Der Stecker 41 weist in seinem Inneren einen um eine Achse 46 schwenkbaren Hebel 47 auf. Eine Platte 48 verschließt die Montageöffnung des Steckers 41. Mit einem Verriegelungselement 49 lässt sich verhindern, dass der Stecker 41 ungewollt aus der Buchse 40 gelöst wird.

Die Abmessungen, das elektrische Verbindungskonzept sowie der physische Aufbau zum Erreichen der Formschlüssigkeit sind ähnlich wie bei den vorhergehenden Ausführungsformen. Auf die diesbezüglichen Beschreibungen wird hier daher verwiesen.

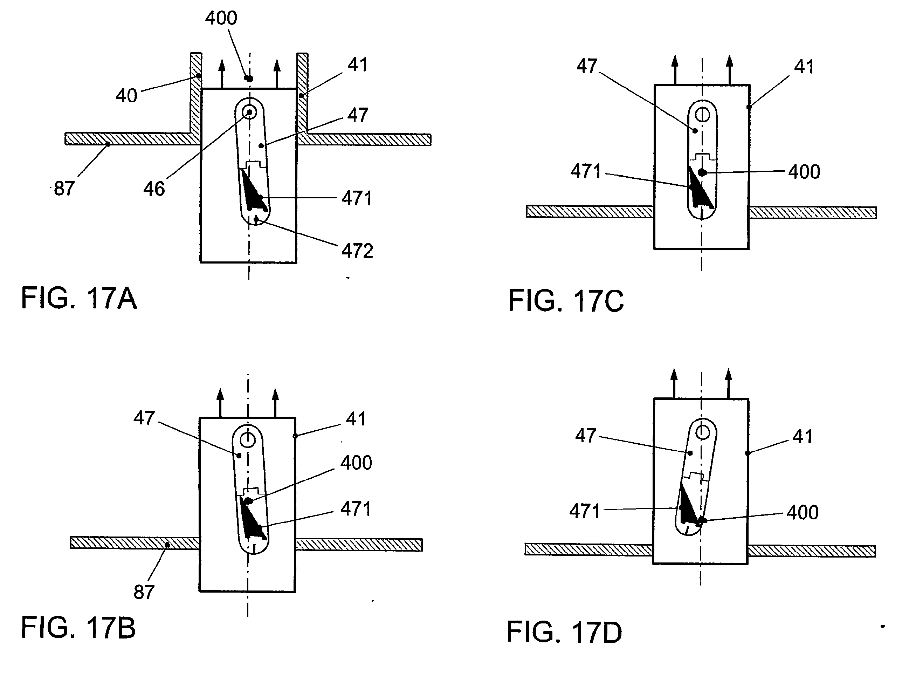

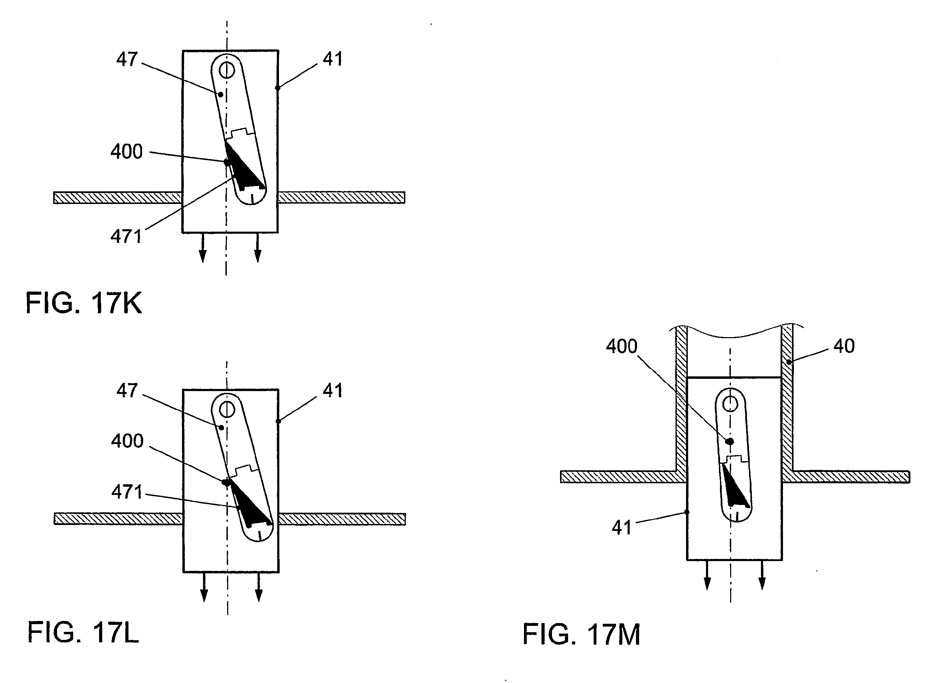

Die Funktionsweise des Einsteckens nach dem Kugelschreiberprinzip wird nun anhand der Figuren 17A bis 17L näher erläutert. In die Buchse 40 wird der Stecker 41 entsprechend den eingezeichneten Pfeilen in Figur 17A eingesteckt. Die Buchse ihrerseits ist in einem Armaturenbrett 87 eingesetzt. In der Buchse 40 ragt senkrecht zur Zeichenebene ein Stift 400 nach oben. Der Hebel 47 im Stecker 41 ist um die Achse 46 federnd gelagert, wodurch sich seine leicht schräge Ausgangsstellung ergibt. Auf dem Hebel 47 ist ein dreieckförmiges erstes Führungselement 471 und in einem Abstand darunter ein zweites Führungselement 472 vorgesehen.

Der Benutzer schiebt nun den Stecker 41 entsprechend Figur 17B weiter in die Buchse (hier der Einfachheit halber nicht gezeichnet) ein, so dass der Stift 400 an dem ersten Führungselement 471 angreift. Beim Weiterschieben des Steckers 41 wird das erste Führungselement 471 mit seiner schrägen Flanke an dem Stift 400 entlanggeführt, wodurch der Hebel 47 gemäß den Figuren 17C und 17D nach links geschwenkt wird.

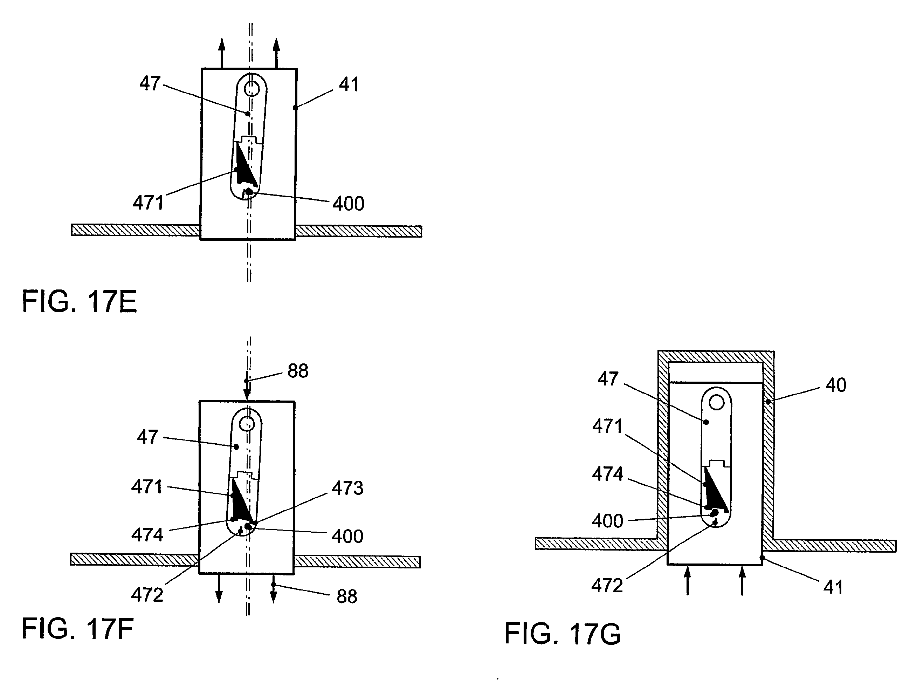

Der Stecker 41 wird soweit in die Buchse eingeschoben, bis der Stift 400 das erste Führungselement 471 passiert hat und der Hebel 47 durch die Federkraft soweit zurückgestellt wird, bis der Stift 400 an dem zweiten Führungselement 472 anliegt, wie dies in Figur 17E dargestellt ist. In diesem Zustand wird der Stecker durch eine in die Buchse integrierte Druckfeder entsprechend Figur 17F zurückgeschoben. Diese Bewegung ist in der Figur durch Pfeile 88 angedeutet. An der in Figur 17F nach unten weisenden Dreieckseite besitzt das erste Führungselement 471 zwei Fortsätze 473 und 474, die die Führung des Stifts 400 vom ersten Führungselement 471 zum zweiten Führungselement 472 steuern bzw. die Schwenkbewegung des Hebels 47 begrenzen. Durch die in der Figur nach unten dargestellte Bewegung 88 wird der Stift 400 an die untere Dreieckseite des ersten Führungselements 471 gedrückt. Dadurch verliert das zweite Führungselement 472 seine Wirkung, so dass der Hebel 47 entsprechend Figur 17G nach rechts bis zu dem Fortsatz 474 schwenken kann. In diesem Zustand ist der Stecker 41 in der Buchse 40 verriegelt, denn der Stift 400 verhindert im Zusammenwirken mit dem ersten Führungselement 471 eine axiale Bewegung des Steckers nach unten bzw. außen.

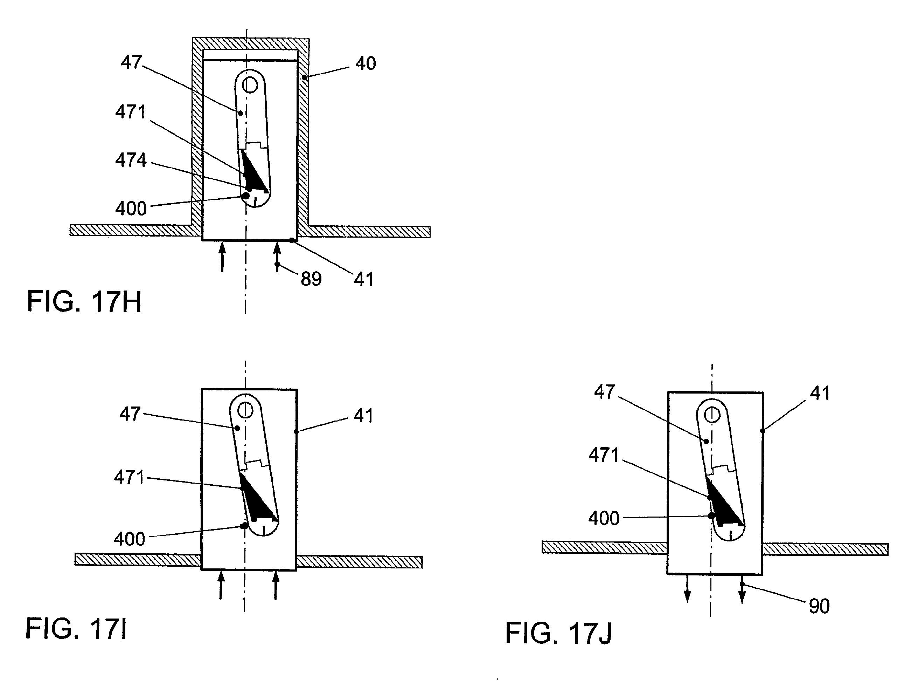

Zur Entriegelung wird der Stecker 41 gemäß Figur 17H nochmals entsprechend den Pfeilen 89 etwas weiter vom Benutzer in die Buchse 40 geschoben. Dadurch passiert der Stift 400 den Fortsatz 474 des ersten Führungselements 471. Sodann kann entsprechend der Darstellung von Figur 17I der Hebel 47 weiter nach rechts schwenken, so dass die unter Dreieckseite des ersten Führungselements 471 nicht mehr eine axiale Bewegung des Steckers 41 nach außen hemmt. Nun kann der Stecker 41 gemäß Figur 17J nach außen gezogen werden, was durch die Pfeile 90 angedeutet ist. Dabei wandert der Stift 400 an der linken Dreieckseite des ersten Führungselements 471 entlang, drückt dabei den Hebel 47 etwas nach rechts und erreicht schließlich gegenüber dem Stecker 41 eine freie Position, die in Figur 17M dargestellt ist. In diesem Zustand kann der Stecker 41 frei aus der Buchse 40 entnommen werden.

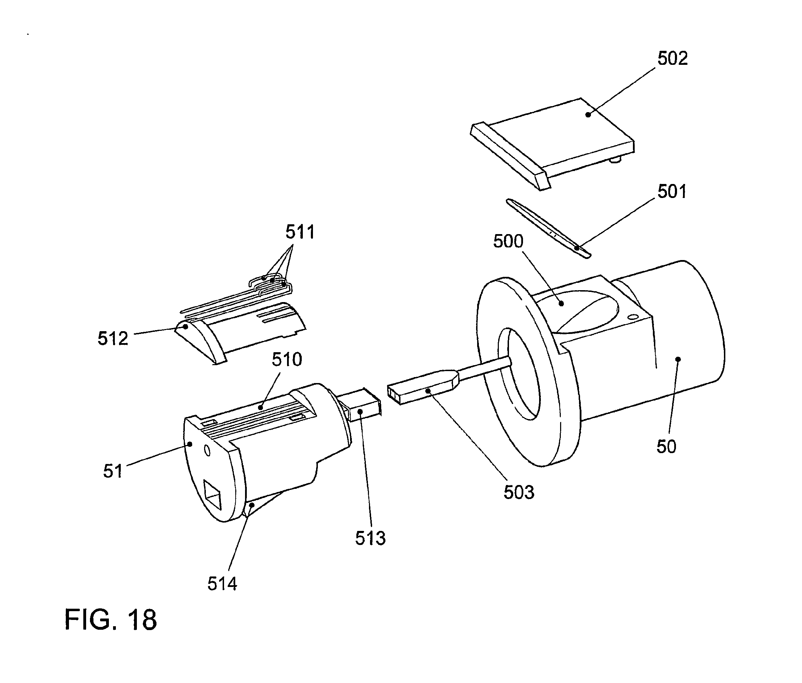

Ein fünftes nicht-erfindungsgemäßes Stecksystem ist in Figur 18 wiedergegeben. Dieses Verbindungssystem ist durch eine lösbare Schnappverbindung gekennzeichnet. Hinsichtlich Mechanik und Elektrik gilt das im Zusammenhang mit den vorhergehenden Ausführungsformen Gesagte. Figur 18 stellt wiederum eine Explosionsansicht der Steckverbindungselemente dar. Das System besteht aus einer Buchse 50 und einem Stecker 51. In die Buchse 50 ist über eine Montageöffnung 500 ein Verschlussdeckel 501 mit integrierter Drehfeder einsetzbar. Die Montageöffnung 500 ist durch einen Deckel 502 verschließbar. In die Buchse 50 ist darüber hinaus ein USB-Stecker 503 integriert.

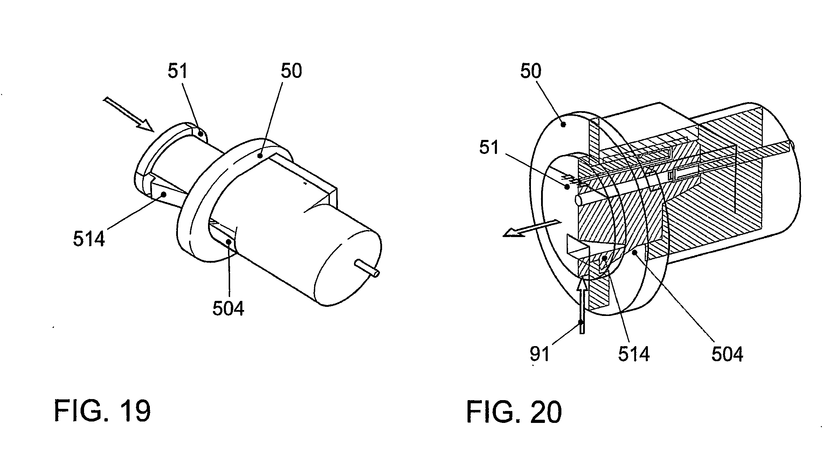

In dem Stecker 51 sind Aussparungen 510 vorgesehen, in die Schleifkontakte 511 einsetzbar sind. Mit einem Steckeroberteil 512 werden die Schleifkontakte 511 an dem Stecker 51 fixiert. Als Gegenstück zu dem USB-Stecker 503 in der Buchse 50 ist in den Stecker 51 eine USB-Buchse 513 integriert. An seiner Unterseite besitzt der Stecker 51 eine Schnappnase 514, die in der gedrehten Ansicht von Figur 19 besser zu sehen ist.

Die Buchse 50 weist an einer entsprechenden Stelle eine Aussparung 504 auf. Beim Einstecken des Steckers 51 in die Buchse 50 schnappt am Ende der Bewegung die Schnappnase 514 in die Aussparung 504, so dass beide Komponenten miteinander verriegelt sind.

Der verriegelte Zustand ist in Figur 20 in einer perspektivischen Darstellung mit überlagerter Schnittansicht wiedergegeben. Dort ist deutlich zu erkennen, wie die Schnappnase 514 in die Aussparung 504 eingreift. Zum Entriegeln ist die Schnappnase 514 entsprechend dem Pfeil 91 anzuheben. Im angehobenen Zustand ist dann der Stecker 51 in axialer Richtung aus der Buchse 50 entnehmbar.

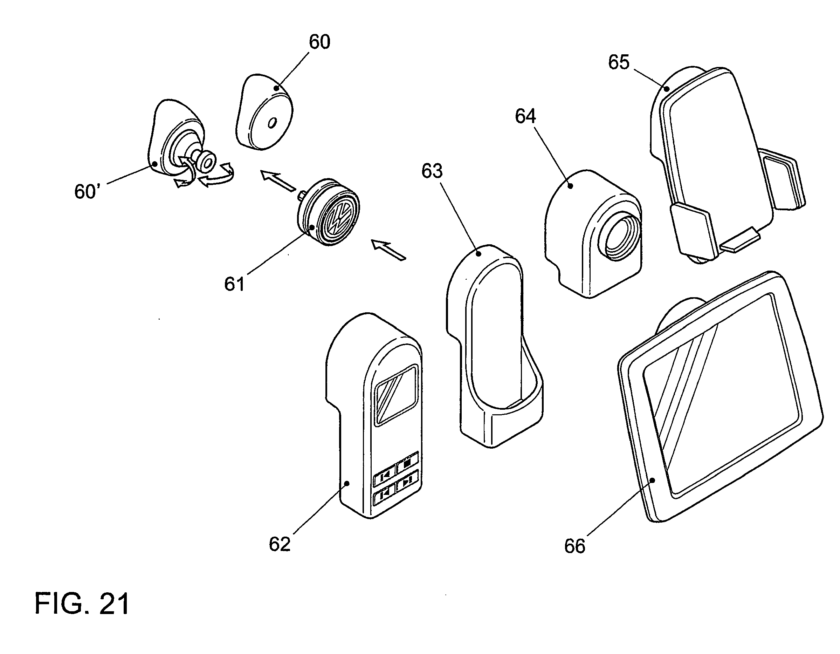

Ein sechstes nicht-erfindungsgemässes Stecksystem ist in Figur 21 skizzenhaft dargestellt. Entsprechend einer einfachen Variante ist in einen Fuß 60 beispielsweise ein Steckknopf 61 mit VW-Emblem mittels einer üblichen, rastbaren Stecker-Buchse-Kopplung einsteckbar. Dieser Steckknopf 61 dient zur Fixierung einer Tasche, eines Netzes oder eines Bands an einer Fahrzeugkomponente. Ein alternativer Fuß 60' besitzt einen Kugelkopf, so dass die Buchse in sämtlichen Richtungen verschwenkbar ist.

An den Stecker dieser Steckverbindung können nun, wie auch bei den Steckern der anderen Ausführungsformen, beliebige Anbauteile montiert werden. In dem Beispiel von Figur 21 sind symbolhaft einige elektronische Geräte dargestellt, die mit dem Stecksystem im Fahrzeug befestigt werden können. So zeigt Figur 21 als ansteckbare Komponente beispielsweise einen MP3-Player 62, eine Handy-Ladestation 63, ein Kameramodul 64, einen PDA-Halter 65 und einen Monitor 66.

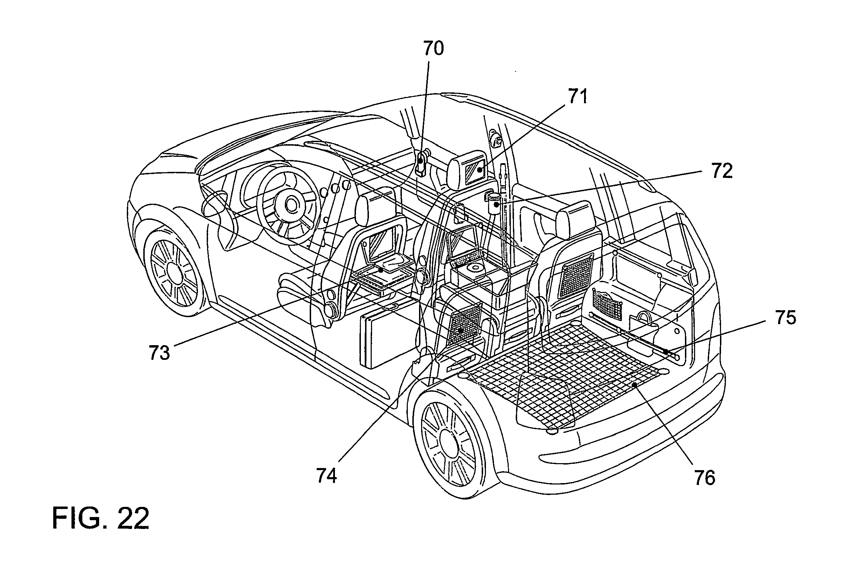

Die Stecksysteme sämtlicher Ausführungsformen sind multifunktionell. Dies bedeutet, dass mit ein und dem gleichen Stecksystem unterschiedliche Komponenten in dem Fahrzeug fixiert werden können, wie dies beispielsweise in Figur 22 angedeutet ist. Einige der dort dargestellten Komponenten sind: eine Handy-Ladeschale 70, ein Monitor 71, ein Mülleimer 72, ein Tisch 73, ein Netz 74, ein Band 75 und eine Matte 76. Durch das universelle Stecksystem können die Anbauteile beliebig ausgetauscht, d. h. an anderen Buchsen befestigt werden. Auf diese Weise erhält der Fahrzeuginhaber die Möglichkeit, sein Fahrzeug sehr individuell zu gestalten.

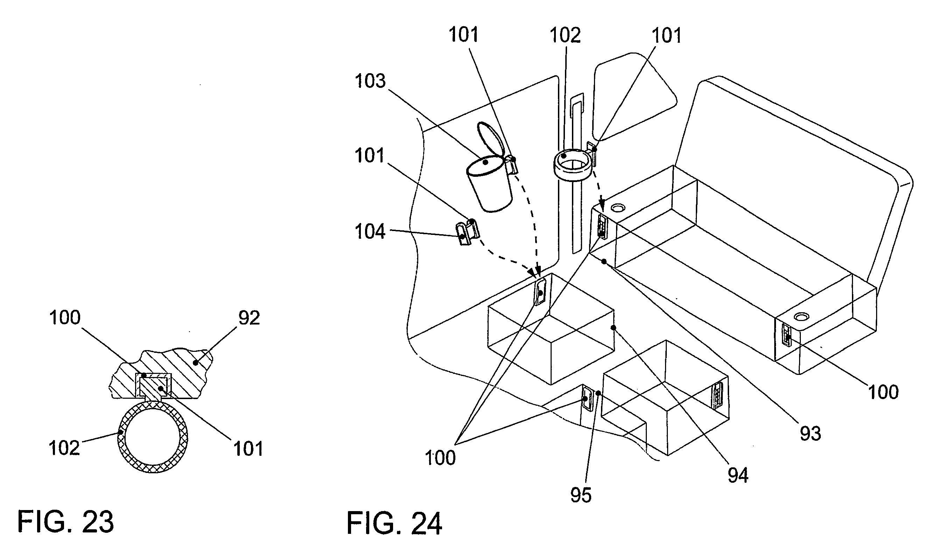

Figur 23 zeigt einen horizontalen Schnitt durch das Stecksystem gemäß eines siebten nicht-erfindungsgemässen Stecksystems. In einen Abschnitt einer Verkleidung 92 ist als erste Steckeinrichtung eine im Querschnitt T-förmige, in vertikaler Richtung verlaufende Hohlschiene 100 eingearbeitet. Die zweite Steckeinrichtung ist als T-förmige Schiene 101 ausgebildet. Das Ineinandergreifen der T-förmigen Schiene 101 und der T-förmigen Hohlschiene 100 kann auch als Schwalbenschwanzführung bezeichnet werden.

An die T-förmige Schiene 101 ist ein Ring 102 angeformt. Dieser Ring 102 kann beispielsweise als Getränkehalter, Regenschirmhalter oder Zeitungshalter eingesetzt werden. Die Funktion ergibt sich in der Regel erst aus dem Einsteckort im Fahrzeuginnenraum.

In der Figur 24 sind mehrere Einsteckorte und mehrere zweite Steckeinrichtungen beispielhaft für das Stecksystem von Figur 23 schemenhaft skizziert. Demnach kann der Ring 102 beispielsweise in die Armlehne 93 einer Rückbank eingesteckt werden. Hierbei kann er sämtliche oben genannten Funktionen übernehmen.

Des Weiteren kann ein Becher mit Deckel 103 als geschlossene Ablage, Abfallbehälter oder Ascher beispielsweise in das Sitzgestell 94 eines Einzelsitzes eingesteckt werden. Alternativ kann dieser Becher auch ohne Deckel ausgeführt sein und somit als offene Ablage, Getränkehalter oder Becher dienen.

Die zweite Steckeinrichtung kann auch als Haken oder Klemmlasche 104 ausgebildet sein. Sie kann beispielsweise die Funktion eines Taschenhalters, Straßenkartenhalters und dergleichen erfüllen. Auch sie ist an beliebigen Orten in Hohlschienen 100, wie beispielsweise auch an der Mittelkonsole 95 einsteckbar.

### Bezugszeichenliste

- 10, 20, 30, 40, 50: Buchsen
- 11, 21, 31, 41, 51: Stecker
- 12: Halter
- 13: U-förmige Aufnahme / Aussparung
- 14, 34: Rundkontakte
- 15: Blende
- 16: Verriegelungshebel
- 17: Halteklammern
- 18: Kontakte
- 19: Arretierungsweg
- 200,513: USB-Buchse
- 210, 504, 510: Ausnehmungen / Aussparungen
- 211, 44, 503: USB-Stecker
- 22: Schulter
- 23: Verriegelungsklappe
- 230: Betätigungsabschnitt
- 231: einschwenkbares Teil
- 232: Achse
- 32: Positioniernasen
- 33: Feststellschraube
- 35: Flachkontakte
- 400: Stift
- 42: Anbauteil
- 43: schwenkbarer Deckel
- 45, 511: Schleifkontakte
- 46: Achse
- 47: schwenkbarer Hebel
- 471, 472: Führungselemente
- 473,474: Fortsätze
- 48: Platte
- 49: Verriegelungselement
- 500: Montageöffnung
- 501: Verschlussdeckel
- 502: Deckel
- 512: Steckeroberteil
- 514: Schnappnase
- 60, 60': Fuß
- 61: Steckknopf
- 62: MP3-Player
- 63: Handy-Ladestation
- 64: Kameramodul
- 65, 81: PDA-Halter
- 66, 71: Monitor
- 70: Handy-Ladeschale
- 72: Mülleimer
- 73: Tisch
- 74: Netz
- 75: Band
- 76: Matte
- 80: Mittelkonsole
- 82: Einbauöffnung
- 83: Abdeckkappe
- 84: Aschenbecher
- 85: USB-Adapter
- 86: Getränkehalter
- 87: Armaturenbrett
- 88, 89, 90, 91: Pfeile

## Patentansprüche

1. Stecksystem zur Halterung und zur elektrischen Kontaktierung einer ersten und einer dazu unterschiedlichen zweiten Einbaukomponente in einem Fahrzeug mit
- einer ersten, als Buchse (10) ausgeführten, Steckeinrichtung (10) zur Befestigung an einer Fahrzeugkomponente (80, 87) und
- einer zweiten, als Stecker (11) ausgeführten, Steckeinrichtung (11), wobei die zweite Steckeinrichtung an dem Ende, welches distal zum für den Einbau der Einbaukomponente vorgesehen Ende ist, mit der ersten Steckeinrichtung (10) formschlüssig verbindbar ist und an dem für den Einbau der Einbaukomponente vorgesehen Ende mit der Einbaukomponente verbindbar ist, und wobei
- die zweite Steckeinrichtung (11) eine starre Halteklammer (17) aufweist, die zur Erzielung einer Steckverbindung in die passende erste Steckeinrichtung (10) in einer ersten Richtung einführbar und im eingeführten Zustand in einer zur ersten senkrechten zweiten Richtung verschiebbar ist, so dass die Halteklammer (17) ein Haltestück der ersten Steckeinrichtung (10) hintergreift, wobei
- die Buchse (10) und der Stecker (11) zur Gewährleistung einer Kontaktierung Metallkontakte aufweisen, **dadurch gekennzeichnet, dass** die Buchse eine U-förmige Aufnahme (13) zum Einführen des Steckers aufweist.

2. Stecksystem nach Anspruch 1, wobei die zweite Einbaukomponente eine der folgenden Komponenten ist: Tisch (73), Band (75), Tasche, Mülleimer (72), Aschenbecher (84), Getränkehalter (86), Vase, elektronisches Gerät (62, 63, 64, 66) und Halter (65, 81) für ein elektronisches Gerät.

3. Stecksystem nach Anspruch 1 oder 2, wobei die erste und/oder zweite Steckeinrichtung eine Verriegelungseinheit (16) zum Verriegeln der beiden Steckeinrichtungen im eingesteckten Zustand aufweist.

4. Stecksystem nach einem der vorhergehenden Ansprüche, wobei die erste Steckeinrichtung (10) mindestens einen elektrischen Steckkontakt (18) und mindestens eine zweite Steckeinrichtung (11) einen entsprechenden Gegensteckkontakt (14) aufweist.

5. Stecksystem nach Anspruch 4, wobei der elektrische Steckkontakt (18) Teil eines USB-, Firewire-, WLAN- oder Bluetooth-Stecksystems ist.

6. Stecksystem nach einem der vorhergehenden Ansprüche mit weiterhin einem Verschluss (15), der auf die erste Steckeinrichtung (10) aufsteckbar oder in diese schwenkbar integriert ist.

7. Stecksystem nach einem der vorhergehenden Ansprüche, wobei eine zweite Steckeinrichtung eine mehrfache Haltefunktion aufweist.

8. Stecksystem nach einem der vorhergehenden Ansprüche, wobei die erste Steckeinrichtung (10) eine Sollbruchstelle aufweist.

9. Verfahren zur Halterung und zur elektrischen Kontaktierung einer ersten und einer dazu unterschiedlichen zweiten Einbaukomponente in einem Fahrzeug mit
- Befestigen mehrerer gleicher erster, als Buchse (10) ausgeführter, Steckeinrichtungen (10) an einer oder mehreren Fahrzeugkomponente (80, 87) und
- formschlüssiges Verbinden einer zweiten, als Stecker (11) ausgeführten, Steckeinrichtung (11), wobei die zweite Steckeinrichtung an dem Ende, welches distal zum für den Einbau der Einbaukomponente vorgesehen Ende ist, mit der ersten Steckeinrichtung (10) und an dem für den Einbau der Einbaukomponente vorgesehen Ende mit der Einbaukomponente verbunden wird, und wobei
- die zweite Steckeinrichtung (11) eine starre Halteklammer (17) aufweist, die zur Erzielung einer Steckverbindung in die passende erste Steckeinrichtung (10) in einer ersten Richtung eingeführt und im eingeführten Zustand in einer zur ersten senkrechten zweiten Richtung verschoben wird, so dass die Halteklammer (17) ein Haltestück der ersten Steckeinrichtung (10) hintergreift, wobei
- die Buchse (10) und der Stecker (11) zur Gewährleistung einer Kontaktierung Metallkontakte aufweisen,
**dadurch gekennzeichnet, dass** der Stecker in eine U-förmige Aufnahme (13) der Buchse eingeführt wird.

## Claims

1. Plug-type system for holding and for making electrical contact with a first and a different second installation component in a vehicle, having
- a first plug-type device (10), which is designed as a bushing (10), to be fastened to a vehicle component (80, 87), and
- a second plug-type device (11), which is designed as a plug (11), wherein the second plug-type device can be connected in an interlocking manner to the first plug-type device (10) at that end which is distal from the end which is intended for installation of the installation component, and can be connected to the installation component at the end which is intended for installation of the installation component, and wherein
- the second plug-type device (11) has a rigid holding clip (17) which can be inserted in a first direction into the matching first plug-type device (10) in order to achieve a plug-type connection, and in the inserted state can be moved in a second direction which is perpendicular to the first direction so that the holding clip (17) engages behind a holding piece of the first plug-type device (10), wherein
- the bushing (10) and the plug (11) have metal contacts for ensuring contact is made, **characterized in that** the bushing has a u-shaped receptacle (13) for insertion of the plug.

2. Plug-type system according to Claim 1, wherein the second installation component is one of the following components: table (73), belt (75), pocket, rubbish bin (72), ashtray (84), beverage holder (86), vase, electronic appliance (62, 63, 64, 66) and holder (65, 81) for an electronic appliance.

3. Plug-type system according to Claim 1 or 2, wherein the first and/or second plug-type device has a locking unit (16) for locking the two plug-type devices in the plugged-in state.

4. Plug-type system according to one of the preceding claims, wherein the first plug-type device (10) has at least one electrical plug-type contact (18) and at least a second plug-type device (11) has a corresponding mating plug-type contact (14).

5. Plug-type system according to Claim 4, wherein the electrical plug-type contact (18) is part of a USB, firewire, WLAN or Bluetooth plug-type system.

6. Plug-type system according to one of the preceding claims, further having a closure means (15) which can be plugged onto the first plug-type device (10) or is pivotably integrated into said plug-type device.

7. Plug-type system according to one of the preceding claims, wherein a second plug-type device has a multiple holding function.

8. Plug-type system according to one of the preceding claims, wherein the first plug-type device (10) has a predetermined breaking point.

9. Method for holding and for making electrical contact with a first and a different second installation component in a vehicle, comprising
- fastening a plurality of identical first plug-type devices (10), which are designed as bushings (10), to one or more vehicle components (80, 87), and
- connecting in an interlocking manner a second plug-type device (11), which is designed as a plug (11), wherein the second plug-type device is connected to the first plug-type device (10) at that end which is distal from the end which is intended for installation of the installation component, and is connected to the installation component at the end which is intended for installation of the installation component, and wherein
- the second plug-type device (11) has a rigid holding clip (17) which can be inserted in a first direction into the matching first plug-type device (10) in order to achieve a plug-type connection, and in the inserted state can be moved in a second direction which is perpendicular to the first direction so that the holding clip (17) engages behind a holding piece of the first plug-type device (10), wherein
- the bushing (10) and the plug (11) have metal contacts for ensuring contact is made, **characterized in that** the plug is inserted into a u-shaped receptacle (13) of the bushing.

## Revendications

1. Système d'enfichage pour la fixation et le contact électrique d'un premier composant intégré et d'un deuxième composant intégré différent dans un véhicule, comprenant
- un premier dispositif d'enfichage (10) réalisé sous forme de douille (10) pour la fixation à un composant du véhicule (80, 87) et
- un deuxième dispositif d'enfichage (11) réalisé sous forme de fiche (11), le deuxième dispositif d'enfichage pouvant être connecté par engagement positif au premier dispositif d'enfichage (10) à l'extrémité qui est distale par rapport à l'extrémité prévue pour l'intégration du composant intégré, et pouvant être connecté au composant intégré à l'extrémité prévue pour l'intégration du composant intégré, et
- le deuxième dispositif d'enfichage (11) présentant une pince de retenue (17) qui peut être insérée dans une première direction dans le premier dispositif d'enfichage adapté (10) pour obtenir une connexion par enfichage et pouvant être déplacée dans l'état inséré dans une deuxième direction perpendiculaire à la première, de sorte que la pince de retenue (17) vienne en prise par l'arrière avec une partie de retenue du premier dispositif d'enfichage (10),
- la douille (10) et la fiche (11) présentant, pour garantir le contact, des contacts métalliques,
**caractérisé en ce que** la douille présente un logement en forme de U (13) pour l'insertion de la fiche.

2. Système d'enfichage selon la revendication 1, dans lequel le deuxième composant intégré est l'un des composants suivants : une table (73), une bande (75), une poche, une poubelle (72), un cendrier (84), un porte-gobelet (86), un vase, un appareil électronique (62, 63, 64, 66) et un support (65, 81) pour un appareil électronique.

3. Système d'enfichage selon la revendication 1 ou 2, dans lequel le premier et/ou le deuxième dispositif d'enfichage présentent une unité de verrouillage (16) pour verrouiller les deux dispositifs d'enfichage dans l'état enfiché.

4. Système d'enfichage selon l'une quelconque des revendications précédentes, dans lequel le premier dispositif d'enfichage (10) présente au moins un contact électrique d'enfichage (18), et au moins un deuxième dispositif d'enfichage (11) présente un contact d'enfichage conjugué correspondant (14).

5. Système d'enfichage selon la revendication 4, dans lequel le contact d'enfichage électrique (18) fait partie d'un système d'enfichage USB, Firewire, WLAN ou Bluetooth.

6. Système d'enfichage selon l'une quelconque des revendications précédentes, comprenant en outre une fermeture (15), qui peut être enfichée sur le premier dispositif d'enfichage (10) ou être intégrée de manière pivotante dans celui-ci.

7. Système d'enfichage selon l'une quelconque des revendications précédentes, dans lequel un deuxième dispositif d'enfichage présente une fonction de retenue multiple.

8. Système d'enfichage selon l'une quelconque des revendications précédentes, dans lequel le premier dispositif d'enfichage (10) présente un point destiné à la rupture.

9. Procédé pour la fixation et le contact électrique d'un premier composant intégré et d'un deuxième composant intégré différent dans un véhicule, comprenant :
- la fixation de plusieurs premiers dispositifs d'enfichage (10) réalisés sous forme de douille (10) sur un ou plusieurs composants de véhicule (80, 87) et
- la connexion par engagement positif d'un deuxième dispositif d'enfichage (11) réalisé sous forme de fiche (11), le deuxième dispositif d'enfichage étant connecté au premier dispositif d'enfichage (10) à l'extrémité qui est prévue distalement par rapport à l'intégration du composant intégré, et au composant intégré à l'extrémité qui est prévue pour l'intégration du composant intégré, et dans lequel :
- le deuxième dispositif d'enfichage (11) présente une pince de retenue (17) qui est insérée dans une première direction dans le premier dispositif d'enfichage adapté (10) pour obtenir une connexion par enfichage et qui est déplacée dans l'état inséré dans une deuxième direction perpendiculaire à la première, de sorte que la pince de retenue (17) vienne en prise par l'arrière avec une partie de retenue du premier dispositif d'enfichage (10),
- la douille (10) et la fiche (11) présentant, pour garantir le contact, des contacts métalliques,
**caractérisé en ce que** la fiche est insérée dans un logement en forme de U (13) de la douille.
